# EUROPEAN PATENT APPLICATION

(11) **EP 1 583 088 A2**
(43) Date of publication of application: **05.10.2005**
(21) Application number: 05252004.6
(22) Date of filing: 30.03.2005
(51) Int. Cl.: G11B 7/125

(54) **Recording apparatus and recording method**

(30) Priority: 31.03.2004 JP 2004105303
(71) Applicant: SONY CORPORATION, Tokyo 140 (JP)
(72) Inventor: Iimura, Shinichiro, Sony Corporation, Tokyo (JP)
(74) Representative: Leppard, Andrew John

(57) **Abstract**

A recording apparatus includes an optical head recording information by irradiating laser light onto an optical recording medium; a laser power control circuit controlling the power of laser light output from the optical head on the basis of a target value of laser power and a monitor signal of the laser power detected by the optical head; and a target-value varying circuit detecting amplitude variations of a light quantity signal of return light of the laser light irradiated onto the optical recording medium and varying the target value on the basis of the amount of the detected amplitude variations.

## Description

The present invention relates to a recording apparatus for performing recording on an optical recording medium such as an optical disc and to a recording method for use with the recording apparatus.

Recording and playback apparatuses in which an optical disc is used as a recording medium have been widely used. For optical discs, read-only discs, write-once discs, rewritable discs, etc., are used. Read-only discs are so-called ROM-type discs on which information recording is performed using, for example, embossed pits. Write-once discs are discs on which a dye-change film is used for a recording layer and which record information by forming dye-change pits (marks) by laser light; only one writing is possible on those discs. Rewritable discs are discs on which a phase-change film is used for a recording layer and which record information by forming phase-change pits (marks) by laser light; rewriting is possible on those discs. These various types of discs are used differently for various types of applications according to their features.

In a recording apparatus for these optical discs (write-once discs and rewritable discs), laser power for recording needs to be appropriately adjusted. For this reason, various types of laser power control technologies have been known, as disclosed in, for example, Japanese Patent Application Nos. 2733969 and 3089844, and US Patent No. 5,126,994.

For example, APC (Auto Power Control) for keeping laser power at a target value, and running OPC (Running Optimum Power Control) as a method for write-once discs are known.

Hitherto, in phase-change rewritable discs, such as CD (Compact Disc)-RW and DVD (Digital Versatile Disc)-RW, if there are scratches on the surface or stains such as fingerprints, in that portion, the laser power that reaches the recording layer becomes small. Therefore, the recording power becomes insufficient, and appropriate information recording may not be performed.

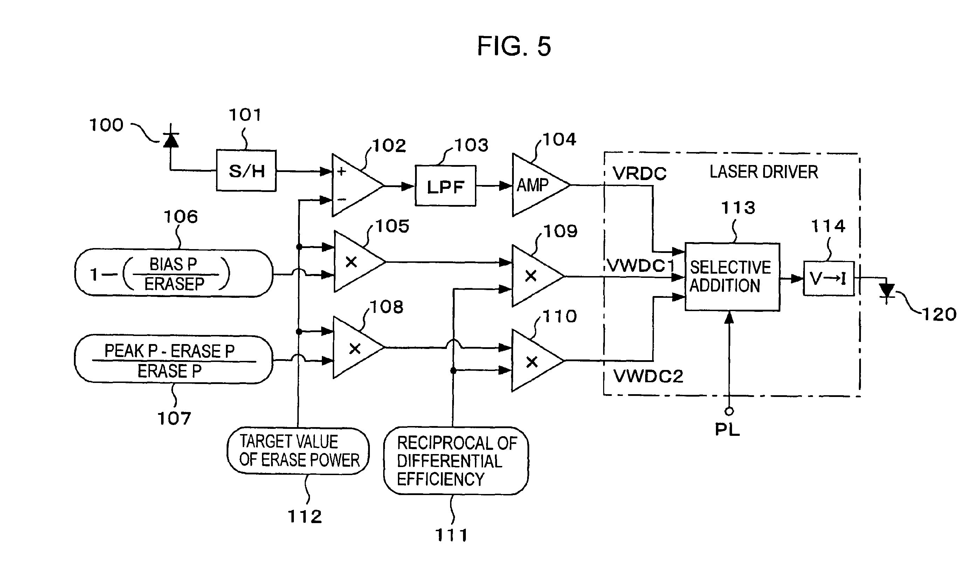

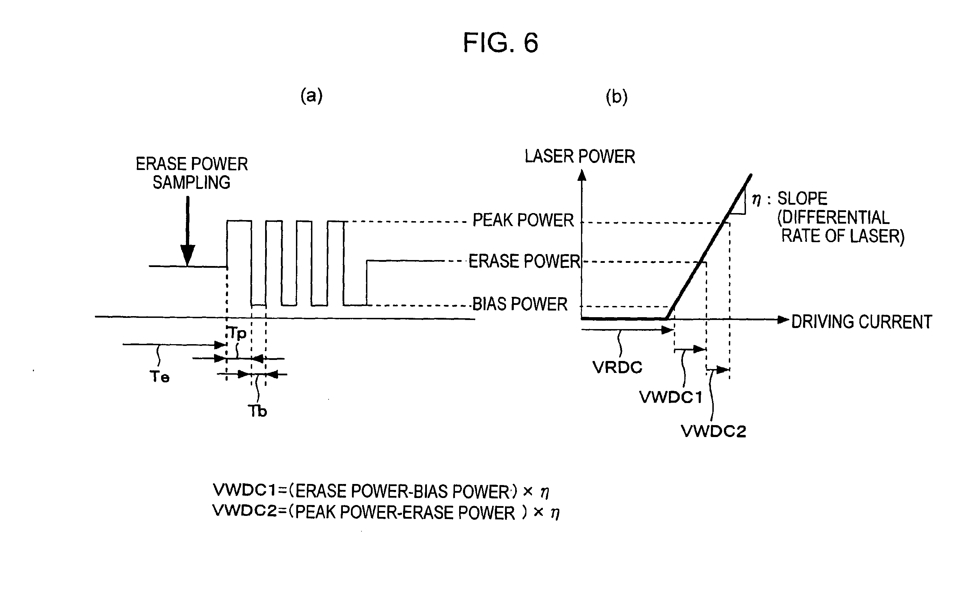

An APC circuit in a disk drive apparatus compatible with a phase-change disc and the operation thereof in the related art are described with reference to Figs. 5 and 6.

The APC circuit of Fig. 5 is a circuit that monitors the laser power at an erase level, increases or decreases the laser power on the basis of the laser power, and keeps the laser power constant.

A monitor detector 100, which is disposed inside a pickup, receives a part of the laser output from a laser diode and outputs a signal responsive to the quantity of that light, that is, outputs a monitor signal indicating the laser power.

A sample and hold circuit 101 samples the monitor signal from the monitor detector 100 at a timing corresponding to the erase power of the laser.

Part (a) of Fig. 6 shows laser power (laser driving signal waveform) during recording. Laser light is emitted in pulsed form on the basis of a peak power and a bias power in a period in which pit marks are formed. In the period in which pit marks are not formed, laser light emission of the erase power is performed. The sample and hold circuit 101 samples a monitor signal at a timing corresponding to this erase power.

For the sampled monitor signal of the erase power, a difference with respect to the target value of the erase power is computed at a subtractor 102. The target value of the erase power is set in a register 112, for example, by a system controller in a disk drive apparatus.

The difference obtained in the subtractor 102 is formed as a bias voltage VRDC after passing through a loop filter 103 and an amplifier 104, and is supplied to a selective addition circuit 113.

Additionally, voltages VWDC1 and VWDC2 are also supplied to the selective addition circuit 113.

Part (b) of Fig. 6 shows the relationship between laser driving current and laser power. As shown in part (b) of Fig. 6, a bias voltage VRDC is a voltage value for obtaining the driving current of the bias power. The voltage VWDC1 is a voltage value to be added to the bias voltage VRDC in order to obtain the driving current of the erase power. The voltage VWDC2 is a voltage value to be added to the voltage of the erase power (= VRDC + VWDC1) in order to obtain the driving current of the peak power.

The voltage VWDC1 is obtained in such a way that, in a multiplier 105, the erase/bias power ratio set in a register 106 is multiplied by the target value of the erase power set in the register 112, and the multiplication result is multiplied by the reciprocal of the differential efficiency η set in a register 111 (that is, divided by the differential efficiency η) in a multiplier 109.

If the bias power is denoted as BiasP and the erase power is denoted as EraseP, the erase/bias power ratio set in the register 106 is 1 - (BiasP/EraseP), and the differential efficiency η is the slope shown in part (b) of Fig. 6.

The voltage VWDC2 is obtained in such a way that, in a multiplier 108, the peak/bias power ratio set in a register 107 is multiplied by the target value of the erase power set in the register 112, and the multiplication result is multiplied by the reciprocal of the differential efficiency set in the register 111 in a multiplier 110.

If the peak power is denoted as PeakP, the peak/erase power ratio set in the register 107 is (PeakP -EraseP)/EraseP.

The selective addition circuit 113 adds the voltages VWDC1 and VWDC2 to the bias voltage VRDC in response to the pulse timing of a driving signal PL of laser light emission. That is, in a period Te, shown in part (a) of Fig. 6, in which erase power is output, the voltage VWDC1 is added to the bias voltage VRDC, and the resulting voltage is output.

In a period Tb in which bias power is output, only the bias voltage VRDC is output. In a period Tp in which peak power is output, the voltages VWDC1 and VWDC2 are added to the bias voltage VRDC, and the resulting voltage is output. The voltage output from the selective addition circuit 113 in this manner is converted into a driving current responsive to the voltage value in a V/I conversion circuit 114, and is supplied to a laser diode 120.

That is, in this APC circuit, erase power is monitored with respect to the laser power output from the laser diode 120, a difference with respect to the target value is detected, and based on the difference, the bias power (bias voltage VRDC) is varied. Since the voltages corresponding to the erase power and the peak power are such that the voltages VWDC1 and VWDC2 are added to the bias voltage VRDC, respectively, the voltages are varied in response to the variation of the bias voltage VRDC.

The APC circuit allows the laser power during recording to be controlled so as to maintain the power level, which is set at a target level.

Such an APC circuit keeps constant the recording laser power and it is difficult for the APC circuit to cope with scratches and stains such as fingerprints on the disc surface, as described above. That is, if the recording laser power is constant, the laser power that reaches the recording film of the disc becomes small depending on scratches and stains, the recording power becomes insufficient, and it is difficult to perform high-precision information recording.

As described above, as laser control for a write-once disc, there is running OPC for varying laser power during a recording operation. However, it is difficult to directly use the running OPC for laser power control of a rewritable disc due to various different circumstances, such as differences between a rewritable disc and a write-once disc, that is, differences in characteristics of recording films, differences in laser driving methods, differences in laser power margins, and differences in the quantities of reflected light during recording.

Accordingly, it is desirable to be capable of performing appropriate information recording by coping with scratches, stains, etc., in a recording apparatus compatible with, particularly, a rewritable disc and capable of obtaining an appropriate RF signal during playback.

According to one aspect of the present invention, there is provided a recording apparatus including: an optical head recording information by irradiating laser light onto an optical recording medium; a laser power control circuit controlling the power of laser light output from the optical head on the basis of a target value of laser power and a monitor signal of the laser power detected by the optical head; and a target-value varying circuit detecting amplitude variations of a light quantity signal of return light of the laser light irradiated onto the optical recording medium and varying the target value on the basis of the amount of the detected amplitude variations.

The laser power control circuit may control the laser power on the basis of the monitor signal in an erase power period of the laser power and the target value of erase power. The target-value varying circuit may vary the target value by adding, to the target value of the erase power, a value responsive to the amount of the amplitude variations with respect to the return light corresponding to the erase power of the laser power.

According to another aspect of the present invention, there is provided a recording method including the steps of: recording information by irradiating laser light onto an optical recording medium; controlling the power of the laser light on the basis of a target value of laser power and a monitor signal of the laser power while the recording step is being performed; and detecting the amplitude variation of a light quantity signal of return light of the laser light irradiated onto the optical recording medium while the recording step is being performed and varying the target value on the basis of the amount of the detected amplitude variations while the recording step is being performed.

That is, according to the embodiment of the present invention, a decrease of the laser power on a recording film is detected by return light (RF signal), and the target power of the APC is increased by an amount corresponding to the decrease, thereby supplementing the recording power on the recording film, which is decreased due to stains, etc., on the disc surface.

In the embodiment of the present invention, a decrease of the laser power on a recording film is detected by return light (RF signal), and the recording laser power is increased by increasing the target power of the APC by an amount corresponding to the decrease. As a result, even if there are scratches, stains, etc., on the surface of a rewritable disc, information recording can be performed appropriately without the recording power becoming insufficient. In other words, even if a disc whose surface is stained is used for performing recording, errors in signals can be decreased during playback, and the recording and playback performance can be increased.

Embodiments of the present invention relate to a laser power control method suitable for use with a phase-change recording medium.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
Fig. 1 is a block diagram of a disk drive apparatus according to an embodiment of the present invention;
Fig. 2 is a block diagram of a pickup and a laser modulation circuit according to the embodiment of the present invention;
Fig. 3 is a block diagram of an APC circuit and a laser driver according to the embodiment of the present invention;
Figs. 4A, 4B, 4C, and 4D are illustrations of a target value varying operation according to the embodiment of the present invention;
Fig. 5 is a block diagram of an APC circuit of the related art; and
Fig. 6 is an illustration of laser pulses and a voltage set by the APC circuit.

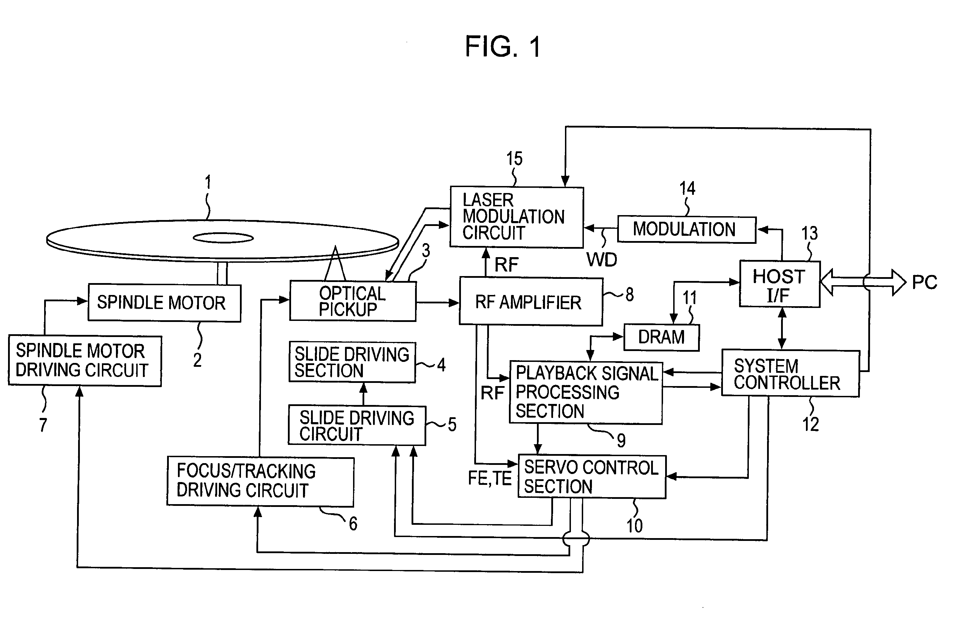

A description will now be given below of an embodiment of a recording and playback apparatus (disk drive apparatus) capable of writing data into, for example, a rewritable disc of a DVD system. The configuration of the disk drive apparatus according to the embodiment is shown in Fig. 1.

It is assumed that a disc 1 is, for example, a rewritable disc (phase-change disc) in a DVD system and a CD system. However, in the disk drive apparatus, usually, in addition to a rewritable disc, recorded is possible from a read-only disc, and recording and playback are possible to and from a write-once disc. Therefore, the disc loaded as the disc 1 is not restricted to a rewritable disc.

The disc 1 is placed on a turn table (not shown) and is rotated at a constant linear velocity (CLV) by a spindle motor 2 during a recording and playback operation. Then, a pickup (optical head) 3 reads data recorded at a constant linear density in a phase-change pit form (or in an embossed pit form or in a dye-change pit form) on the disc 1. In addition to CLV, the disc 1 may be rotated at a constant angular velocity (CAV).

As will be described later, inside the pickup 3, there are provided a laser diode serving as a laser source, a photodetector for detecting reflected light, an objective lens serving as an output end of laser light, an optical system for irradiating laser light onto a disc recording surface via the objective lens and guiding the reflected light to the photodetector, a two-axis mechanism, and the like. The two-axis mechanism movably holds the objective lens in the tracking direction and in the focus direction. The entire pickup 3 is movable in the radial direction of the disc by a slide driving section 4.

The information of reflected light from the disc 1 is detected by the photodetector, is formed as an electrical signal responsive to the quantity of the received light, and is supplied to an RF amplifier 8.

The RF amplifier 8 is provided with a current-voltage conversion circuit in such a manner as to correspond to output current from a plurality of photodetectors inside the pickup 3, a matrix computation/amplifier circuit, etc., and generates a necessary signal by a matrix computation process. For example, an RF signal, which is playback data, a focus error signal FE for servo control, a tracking error signal TE, etc., are generated.

The playback RF signal output from the RF amplifier 8 is supplied to a playback signal processing section 9, and the focus error signal FE and the tracking error signal TE are supplied to a servo control section 10.

In the playback signal processing section 9, the playback RF signal obtained in the RF amplifier 8 is subjected to binarization, PLL clock generation, a decoding process for an EFM+ signal (8-16 modulation signal), an error correction process, etc.

The playback signal processing section 9 performs a decoding process and an error correction process by using a DRAM 11. The DRAM 11 is also used as a cache for storing data obtained from a host interface 13 and for transferring data to a host computer.

Then, the playback signal processing section 9 stores the decoded data in the DRAM 11 serving as a cache memory. As the playback output from the disk drive apparatus, data buffered in the DRAM 11 is read and transferred.

Furthermore, in the playback signal processing section 9, subcode information, ATIP information, LPP information, ADIP information, sector ID information, etc., are extracted from the information obtained by performing EFM+ demodulation and error correction on the RF signal, and these pieces of information are supplied to a system controller 12. The system controller 12 is formed by, for example, a microcomputer, and controls the entire apparatus.

The host interface 13 is connected to a host apparatus, such as an external personal computer, and performs communications of playback data, a read/write command, etc., with the host apparatus.

More specifically, the playback data stored in the DRAM 11 is transferred and output to the host apparatus via the host interface 13. The read/write command, recording data, and other signals from the host apparatus are buffered in the DRAM 11 via the host interface 13 and are supplied to the system controller 12.

As a result of the write command and recording data being supplied from the host apparatus, recording onto the disc 1 is performed.

During the data recording, in a modulation section 14, a process for recording is performed on the recording data buffered in the DRAM 11. That is, error correction code addition, EFM+ modulation, etc., are performed.

Then, recording data WD modulated in this manner is supplied to a laser modulation circuit 15. The laser modulation circuit 15 drives a semiconductor laser inside the pickup 3 in accordance with the recording data so as to perform laser output in accordance with the recording data, so that data is written onto the disc 1.

As will be described in detail later, an RF signal (the quantity of return light during recording) from the RF amplifier 8 is supplied to the laser modulation circuit 15. The return light during recording is not based on the playback data by pits that have already been recorded, but is basically a signal responsive to laser light that is output, and becomes a waveform similar to the waveform of a laser driving signal.

During this recording operation, the system controller 12 is controlled to irradiate laser light at a recording power from the pickup 3 to the recording area of the disc 1. That is, when the disc 1 is a rewritable disc having a phase-change recording layer, the crystal structure of the recording layer changes due to the heat application of laser light, and phase-change pits are formed. That is, various kinds of data are recorded in such a manner that the presence and absence of pits and the length thereof are changed. Furthermore, when laser light is irradiated again onto the portion where pits are formed, the crystal structure that is changed when data is recorded returns to its original state as a result of heat application, the pits disappear, and the data is erased.

Then, in this case, as shown in Fig. 6, in the portion where phase-change pits are formed, the laser light is pulse driven by peak power and bias power. In the portion where pits are not formed, laser output of erase power is performed to erase past data.

The servo control section 10 generates various kinds of servo driving signals, such as focus, tracking, slide, and spindle, from the focus error signal FE and the tracking error signal TE from the RF amplifier 8 and a spindle error signal SPE from the playback signal processing section 9 or the system controller 12 so as to allow a servo operation to be performed.

That is, a focus driving signal and a tracking driving signal are generated in response to the focus error signal FE and the tracking error signal TE and are supplied to a focus/tracking driving circuit 6. The focus/tracking driving circuit 6 drives a focus coil and a tracking coil of the two-axis mechanism in the pickup 3. As a result, a tracking servo loop and a focus servo loop by the pickup 3, the RF amplifier 8, the servo control section 10, the focus/tracking driving circuit 6, and the two-axis mechanism are formed.

The servo control section 10 further supplies, to a spindle motor driving circuit 7, a spindle driving signal generated in response to the spindle error signal SPE. The spindle motor driving circuit 7 applies, to the spindle motor 2, for example, a three-phase driving signal in response to the spindle driving signal in order to allow the spindle motor 2 to rotate. Furthermore, the servo control section 10 generates a spindle driving signal in response to a spindle kick/brake control signal from the system controller 12 in order to allow the spindle motor driving circuit 7 to start up, stop, accelerate, and decelerate the spindle motor 2.

The servo control section 10 generates a slide driving signal, for example, on the basis of a slide error signal obtained as low-frequency components of the tracking error signal TE and access execution control from the system controller 12, and supplies the slide driving signal to a slide driving circuit 5. The slide driving circuit 5 drives the slide driving section 4 in response to the slide driving signal. The slide driving section 4 has a mechanism formed of a main shaft for holding the pickup 3, a sled motor, transmission gears, etc., (not shown). The slide driving circuit 5 drives the slide driving section 4 in response to the slide driving signal, causing the pickup 3 to slide in a necessary manner.

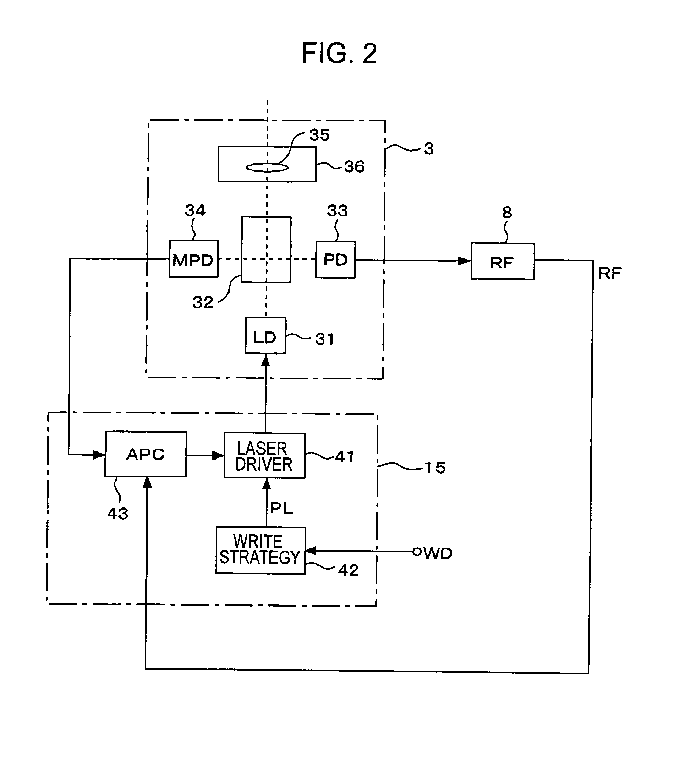

As parts related to APC of the laser power in the disk drive apparatus having the above-described configuration of Fig. 1, the pickup 3 and the laser modulation circuit 15 are shown in Fig. 2.

Fig. 2 shows the overall internal configuration of the pickup 3. As described above briefly, the pickup 3 is provided with a laser diode 31 serving as a laser source, a photodetector 33 for detecting reflected light, an objective lens 35 serving as an output end of laser light, an optical system 32 for irradiating laser light onto a disc recording surface via the objective lens 35 and guiding the reflected light to the photodetector 33, and a two-axis mechanism 36 having the above-described configuration for holding the objective lens 35.

The optical system 32 is provided with a polarizer, such as a polarized beam splitter, and various kinds of lenses, so that the optical path of the laser light from the laser diode 31 and the return light reflected on the disc 1 is controlled.

When the disc 1 as a rewritable disc is loaded and recording is performed, the laser light output from the laser diode 31 is irradiated onto the recording surface of the disc 1 via the optical system 32 and the objective lens 35, thereby forming pits (phase-change pits) on the recording surface. At that case, return light reflected on the recording surface is obtained.

The return light from the disc 1 enters the photodetector 33 via the objective lens 35 and the optical system 32, is photoelectrically converted, and is supplied to the RF amplifier 8.

In the RF amplifier 8, a computation process is performed on the signal from the photodetector 33 in order to generate an RF signal, which is the sum signal of the quantity of light, a focus error signal, a tracking error signal, etc., which is as described above. In the case of recording, the RF signal (the light quantity sum signal) obtained in the RF amplifier 8 becomes a signal similar to the laser output waveform of the laser diode 31, that is, the laser driving signal waveform, as described above.

Inside the pickup 3, furthermore, a monitor detector 34 is provided for APC (Auto Power Control). A part of the laser light from the laser diode 31 is supplied to, for example, the monitor detector 34 via the optical system 32. Then, the monitor detector 34 outputs an electrical signal responsive to the quantity of the received light. That is, information on the quantity of the output laser light is obtained by the monitor detector 34.

The laser modulation circuit 15 is provided with a laser driver 41, a write strategy 42, and an APC circuit 43.

The recording data WD supplied from the modulation section 14 of Fig. 1 is formed as laser driving pulses after undergoing waveform shaping and a compensation process in the write strategy 42 and is supplied to the laser driver 41. The laser driver 41 drives the laser diode 31 on the basis of laser driving pulses so as to perform laser light emission.

Here, the APC circuit 43 functions to keep constant the laser output level. The APC circuit 43 obtains the information of the output laser light level by the monitor detector 34.

The APC circuit 43 computes the difference between the target value stored in the internal register and the information of the output laser light level by the monitor detector 34, and increases or decreases the driving current from the laser driver 41 in accordance with the difference, thereby controlling the laser light level from the laser diode 31 so as to be maintained at the target value. This becomes the APC function.

In this embodiment, errors are prevented from increasing during playback of recorded information due to scratches, stains, etc., on the disc surface. For this purpose, when the laser power on the recording film is decreased due to stains, etc., on the disc surface, the laser power is supplemented by increasing the output of the laser, so that appropriate phase-change pits are formed.

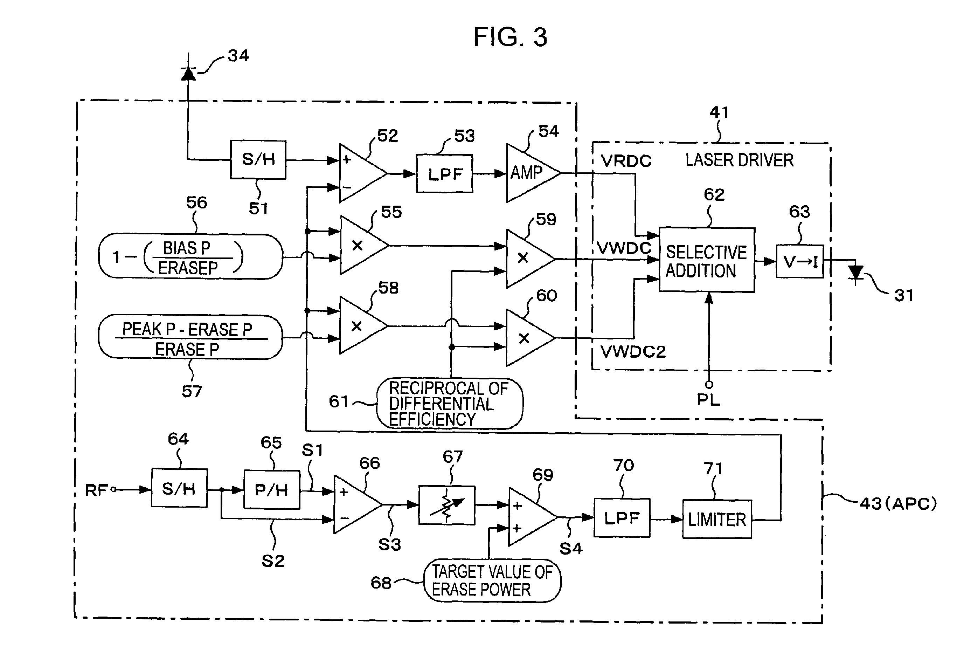

More specifically, the decrease of the laser power on the recording film is detected by an RF signal, and the target power of the APC is increased by an amount corresponding to the decrease, thereby supplementing the recording power. Therefore, the configuration is formed in such a way that, as shown in Fig. 2, the RF signal is supplied to an APC circuit 43, and the APC circuit 43 varies the target value of the laser power on the basis of the RF signal. The configuration of the APC circuit 43 and the laser driver 41 for the above purpose is shown in Fig. 3.

The basic APC function configuration of the APC circuit 43 of Fig. 3 is identical to that of the example described with reference to Fig. 5. That is, the laser power at the erase power is monitored, and the laser power is increased or decreased on the basis of the laser power so as to keep the laser power constant.

For this purpose, first, a sample and hold circuit 51 samples the monitor signal from the monitor detector 34 at a timing corresponding to the erase power of the laser (see part (a) of Fig. 6). For the sampled monitor signal of the erase power, a difference with respect to the target value of the erase power is computed in a subtractor 52. In the case of this example, the target value of the erase power provided to the subtractor 52 is an output of a limiter 71. The target value of the erase power will be described later. The difference obtained in the subtractor 52 is formed as a bias voltage VRDC after passing through a loop filter 53 and an amplifier 54, and is supplied to a selective addition circuit 62.

Additionally, voltages VWDC1 and VWDC2 are also supplied to the selective addition circuit 62. As described with reference to part (b) of Fig. 6, the bias voltage VRDC is a voltage value for obtaining the driving current of the bias power. The voltage VWDC1 is a voltage value to be added to the bias voltage VRDC in order to obtain the driving current of the erase power. The voltage VWDC2 is a voltage value to be added to the voltage of the erase power (= VRDC + VWDC1) in order to obtain the driving current of the peak power.

The voltage VWDC1 is obtained in such a way that, in a multiplier 55, the erase/bias power ratio set in a register 56 is multiplied by the target value of the erase power supplied from the limiter 71, and the multiplication result is multiplied by the reciprocal of the differential efficiency η set in a register 61 (that is, divided by the differential efficiency η) in a multiplier 59.

If the bias power is denoted as BiasP and the erase power is denoted as EraseP, the erase/bias power ratio set in the register 56 is 1 - (BiasP/EraseP), and the differential efficiency η is the slope shown in part (b) of Fig. 6.

The voltage VWDC2 is obtained in such a way that, in a multiplier 58, the peak/erase power ratio set in a register 57 is multiplied by the target value of the erase power supplied from the limiter 71, and the multiplication result is multiplied by the reciprocal of the differential efficiency set in the register 61 in a multiplier 60.

If the peak power is denoted as PeakP, the peak/erase power ratio set in the register 57 is (PeakP - EraseP)/EraseP.

The selective addition circuit 62 adds the voltages VWDC1 and VWDC2 to the bias voltage VRDC in response to a driving signal PL of laser light emission, that is, a pulse timing supplied from the write strategy 42 of Fig. 2. That is, in a period Te, shown in part (a) of Fig. 6, in which erase power is output, the voltage VWDC1 is added to the bias voltage VRDC, and the resulting voltage is output.

In a period Tb in which bias power is output, only the bias voltage VRDC is output. In a period Tp in which peak power is output, the voltages VWDC1 and VWDC2 are added to the bias voltage VRDC, and the resulting voltage is output. The voltage output from the selective addition circuit 62 in this manner is converted into a driving current responsive to the voltage value in a V/I conversion circuit 63, and is supplied to a laser diode 31.

In the APC function according to the configuration described up to this point, erase power is monitored with respect to the laser power output from the laser diode 31, a difference with respect to the target value is detected, and based on the difference, the bias power (the bias voltage VRDC) is varied. Since the voltages corresponding to the erase power and the peak power are such that the voltages VWDC1 and VWDC2 are added to the bias voltage VRDC, respectively, the voltages are varied in response to the variation of the bias voltage VRDC.

The APC circuit allows the laser power during recording to be controlled so as to maintain the power level, which is set at a target level.

In this example, the configuration is formed in such a way that, in order to deal with scratches and stains, the target value of the APC function, that is, the target value of the erase power input to the subtractor 52 and the multipliers 55 and 58, is varied. Therefore, there are provided a sample and hold circuit 64, a peak hold circuit 65, a subtractor 66, a gain adjustment unit 67, an adder 69, a low-pass filter 70, and a limiter 71.

The RF signal (the sum signal of the return light) from the RF amplifier 8 is supplied to the sample and hold circuit 64. The sample and hold circuit 64 samples the RF signal at a timing corresponding to the erase power. The peak hold circuit 65 peak-holds the output of the sample and hold circuit 64. The subtractor 66 computes the difference between the peak level held by the peak hold circuit 65 and the level held by the sample and hold circuit 64. This difference is gain-adjusted by the gain adjustment unit 67, and thereafter is supplied to the adder 69.

Furthermore, the target value of the erase power set in the register 68 by the system controller 12 is supplied to the adder 69. Therefore, the difference value for which gain adjustment is made with respect to the target value of the erase power is added to the adder 69. The upper-limit value of this addition result is limited by the limiter 71 via the low-pass filter 70 and is supplied as the target value of the erase power for the above-described APC function to the subtractor 52 and the multipliers 55 and 58.

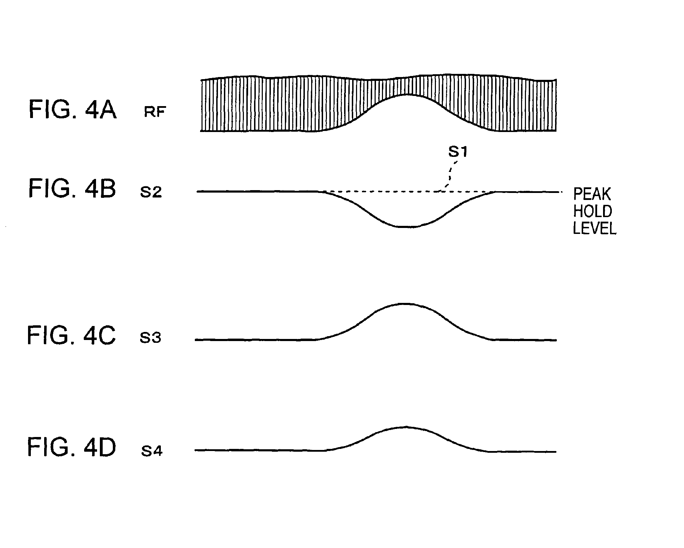

With this configuration, the target value of the erase power is increased according to, for example, scratches and stains, and the laser power is increased for only that portion. Depending on, for example, scratches and stains, as shown in Fig. 4A, amplitude variations of the RF signal occur.

In the sample and hold circuit 64, the RF signal in the period of the erase power, that is, in the period in which the laser driving signal is not pulse-modulated, is sampled. The sampled and held signal S2 becomes as shown in Fig. 4B according to the amplitude variations of the RF signal. On the other hand, in the peak hold circuit 65, since the peak hold circuit 65 peak-holds the output of the sample and hold circuit 64, the difference between the peak-held signal S1 and the sampled and held signal S2 becomes larger according to the amplitude variations due to scratches, etc. Therefore, the output S3 of the subtractor 66 becomes as shown in Fig. 4C, and furthermore, a voltage responsive to the output S3 is added to the target value of the erase power in the adder 69. As a result, the target value (S4) of the erase power becomes as shown in Fig. 4D.

More specifically, as a result of computing the difference S3 between the signal S2 obtained by sampling and holding the erase portion of the RF signal being recorded and the signal S1 such that the sampled and held signal S2 is peak-held with a long time constant, the portion where the signal level drops locally (local amplitude variations of the RF signal) can be extracted. The very portion where the signal level drops locally corresponds to the portion where the quantity of the reflected light is decreased due to scratches and fingerprints.

Since the difference signal S3 is added together with the target value at the erase level, the target value of the erase power increases according to stains, etc., on the disc surface. Specifically speaking, the target value is increased to the erase power by an amount corresponding to the insufficient laser power on the recording surface.

Since such a target value of the erase power is supplied as the target value of the APC function to the subtractor 52 and the multipliers 55 and 58, the APC function allows the bias voltage VRDC and the voltages VWDC1 and VWDC2 for setting the laser power to be increased according to stains, etc. That is, the laser power is increased by an amount corresponding to the insufficient laser power due to local scratches and stains.

The waveform of Fig. 4 is shown for the purpose of illustrating operation. As a result of the target value of the erase power being varied in the above-described operation, in practice, hardly any amplitude variations shown in Fig. 4A are seen. That is, depending on the setting of the loop gain, the target value of the erase power is varied according to the amplitude variations of the RF signal, and the laser power is increased. As a result, the drop of the amplitude is restored instantly.

How a response (the change of the target value of the erase power) should be made by determining as to which degree of amplitude variations is caused by scratches and stains depends on the setting of the time constant of the peak hold circuit 65.

As a result of the laser power being controlled to vary according to local scratches and stains in this manner, even if there are scratches, etc., on the disc surface, recording can be performed with an appropriate laser power, and an appropriate RF signal having a small amount of errors can be obtained during playback.

In the foregoing, the present invention has been described in terms of the embodiments, but a variety of modifications are possible in the present invention. For example, in terms of the configuration, instead of the sample and hold circuit 64, a low-pass filter may be used.

Furthermore, although the embodiments have been described as a disk drive apparatus compatible with a DVD system disc, the present invention can be used in a recording apparatus compatible with disc media of other types, such as a CD system and a Blu-Ray Disc system.

In embodiments, a recording apparatus is provided including an optical head recording information by irradiating laser light onto an optical recording medium; a laser power control circuit controlling the power of laser light output from the optical head on the basis of a target value of laser power and a monitor signal of the laser power detected by the optical head; and a target-value varying circuit detecting amplitude variations of a light quantity signal of return light of the laser light irradiated onto the optical recording medium and varying the target value on the basis of the amount of the detected amplitude variations.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A recording apparatus comprising:
an optical head recording information by irradiating laser light onto an optical recording medium;
a laser power control circuit controlling the power of laser light output from the optical head on the basis of a target value of laser power and a monitor signal of the laser power detected by the optical head; and
a target-value varying circuit detecting amplitude variations of a light quantity signal of return light of the laser light irradiated onto the optical recording medium and varying the target value on the basis of the amount of the detected amplitude variations.

2. The recording apparatus according to Claim 1, wherein the laser power control circuit controls the laser power on the basis of the monitor signal in an erase power period of the laser power and the target value of erase power, and
the target-value varying circuit varies the target value by adding, to the target value of the erase power, a value responsive to the amount of the amplitude variations with respect to the return light corresponding to the erase power of the laser power.

3. The recording apparatus according to Claim 1, wherein the optical head records information on a phase-change optical recording medium.

4. A recording method comprising the steps of:
recording information by irradiating laser light onto an optical recording medium;
controlling the power of the laser light on the basis of a target value of laser power and a monitor signal of the laser power while the recording step is being performed; and
detecting the amplitude variation of a light quantity signal of return light of the laser light irradiated onto the optical recording medium while the recording step is being performed and varying the target value on the basis of the amount of the detected amplitude variations while the recording step is being performed.

5. The recording method according to Claim 4, wherein, in the laser power control step, the laser power is controlled on the basis of the monitor signal in an erase power period of laser light and on the basis of the target value of erase power, and
in the target-value varying step, the target value is varied by adding, to the target value of the erase power, a value responsive to the amount of the amplitude variations with respect to the return light corresponding to the erase power of the laser power.
